(19) Europäisches Patentamt
European Patent Office
Office européen des brevets

(11) **EP 3 327 062 B1**

(12) **EUROPÄISCHE PATENTSCHRIFT**

(45) Veröffentlichungstag und Bekanntmachung des Hinweises auf die Patenterteilung:
**01.01.2020  Patentblatt 2020/01**

(51) Int Cl.:
***C08G 69/26*** *(2006.01)*

(21) Anmeldenummer: **17205345.6**

(22) Anmeldetag: **11.06.2014**

(54) **TEILAROMATISCHE COPOLYAMIDE MIT HOHER GLASÜBERGANGSTEMPERATUR UND HOHEM KRISTALLINITÄTSGRAD**

PARTIALLY AROMATIC COPOLYAMIDES WITH A HIGH GLASS TRANSITION TEMPERATURE AND HIGH DEGREE OF CRYSTALLINITY

COPOLYAMIDES PARTIELLEMENT AROMATIQUES AVEC UNE TEMPÉRATURE DE TRANSITION VITREUSE ÉLEVÉE ET UN DEGRÉ DE CRISTALLINITÉ ÉLEVÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2013  EP 13171659**

(43) Veröffentlichungstag der Anmeldung:
**30.05.2018  Patentblatt 2018/22**

(62) Dokumentnummer(n) der früheren Anmeldung(en) nach Art. 76 EPÜ:
**14729013.4 / 3 008 106**

(73) Patentinhaber: **BASF SE**
**67056 Ludwigshafen am Rhein (DE)**

(72) Erfinder:
• **RICHTER, Florian**
**68159 Mannheim (DE)**

• **SCHMIDT, Christian**
**67061 Ludwigshafen (DE)**
• **CLAUSS, Joachim**
**64297 Darmstadt (DE)**
• **SCHWIEGK, Stefan**
**67433 Neustadt (DE)**
• **WILMS, Axel**
**67227 Frankenthal (DE)**
• **KORY, Gad**
**69251 Gaiberg (DE)**

(74) Vertreter: **BASF IP Association**
**BASF SE**
**G-FLP-C006**
**67056 Ludwigshafen (DE)**

(56) Entgegenhaltungen:
**EP-A2- 0 667 367     WO-A1-2008/155271**

EP 3 327 062 B1

**Beschreibung**

HINTERGRUND DER ERFINDUNG

Die vorliegende Erfindung betrifft teilaromatische Copolyamide mit hoher Glasübergangstemperatur und hohem Kristallinitätsgrad, eine Polyamid-Formmasse, die ein solches teilaromatisches Copolyamid enthält und die Verwendung der teilaromatischen Copolyamide und der Polyamid-Formmassen.

STAND DER TECHNIK

Polyamide gehören zu den weltweit in großem Umfang hergestellten Polymeren und dienen neben den Hauptanwendungsbereichen Folien, Fasern und Werkstoffen einer Vielzahl weiterer Verwendungszwecke. Eine wichtige Gruppe der Polyamide sind teilkristalline oder amorphe, thermoplastische, teilaromatische Polyamide, die als wichtige technische Kunststoffe breite Verwendung gefunden haben. Sie zeichnen sich insbesondere durch ihre hohe Temperaturbeständigkeit aus und werde auch als Hochtemperatur-Polyamide (HTPA) bezeichnet. Ein wichtiger Einsatzbereich der HTPA ist die Herstellung von Elektro- und Elektronikbauteilen, wobei insbesondere Polymere auf Basis von Polyphthalamid (PPA) sich für den Einsatz in Lötprozessen unter bleifreien Bedingungen (lead free soldering) eignen. HTPA dienen dabei unter Anderem zur Herstellung von Steckverbindern, Mikroschaltern und -tastern und Halbleiterbauteilen, wie Reflektorgehäusen von Leuchtdioden (LED). Ein weiterer wichtiger Einsatzbereich der HTPA sind Automobil-Anwendungen im Hochtemperaturbereich. Hier kommt es vor allem auf eine gute Wärmealterungsbeständigkeit, hohe Festigkeit und Zähigkeit und Schweißnahtfestigkeit der eingesetzten Polymere an. Amorphe HTPA oder solche mit sehr geringen kristallinen Anteilen sind transparent und eignen sich speziell für Anwendungen, bei denen Durchsichtigkeit vorteilhaft ist. Teilkristalline HTPA zeichnen sich im Allgemeinen durch eine dauerhafte Beständigkeit bei hoher Umgebungstemperatur aus und eignen sich z. B. für Anwendungen im Motorraumbereich.

Polyamide für den Einsatz in Formmassen für Hochtemperaturanwendungen müssen ein komplexes Eigenschaftsprofil aufweisen, wobei gute mechanische Eigenschaften auch bei einer thermischen Langzeitbelastung mit einer guten Verarbeitbarkeit in Einklang gebracht werden muss. So verbessern beispielsweise hohe Anteile an Hexamethylendiamin/Terephthalsäure zwar die Kristallinität und erhöhen signifikant die Glasübergangstemperaturen, jedoch verschlechtert sich mit zunehmendem Gehalt dieser Monomereinheiten oftmals die Verarbeitbarkeit aufgrund der hohen Schmelztemperaturen.

Die WO 2008/155271 beschreibt ein Verfahren zur Herstellung teilaromatischer Copolyamid auf Basis von Dicarbonsäuren und Diaminen, wobei sich das Monomerengemisch aus 50 Mol%Dicarbonsäuregemisch (60 bis 88 Gew.-% Terephthalsäure und 40 Gew.-% Isophthalsäure) und 50 Mol% Hexamethylendiamin zusammensetzt. Es wird weiterhin ganz allgemein beschrieben, dass 0 bis 5 Gew.-% des Hexamethyldiamins durch andere $C_{2-30}$-Diamine ersetzt werden können.

Die EP 0 667 367 A2 beschreibt teilaromatische, teilkristalline, thermoplastische Polyamid-Formmassen, enthaltend

A) 40 bis 100 Gew.-% eines Copolyamids, aufgebaut aus

a1) 30 bis 44 Mol% Einheiten, welche sich von Terephthalsäure ableiten,
a2) 6 bis 20 Mol% Einheiten, welche sich von Isophthalsäure ableiten,
a3) 43 bis 49,5 Mol% Einheiten, welche sich von Hexamethylendiamin ableiten,
a4) 0,5 bis 7 Mol% Einheiten, welche sich von aliphatischen cyclischen Diaminen mit 6 bis 30 C-Atomen ableiten,

wobei die Molprozente der Komponenten a1) bis a4) zusammen 100 % ergeben und
B) 0 bis 50 Gew.-% eines faser- oder teilchenförmigen Füllstoffes,
C) 0 bis 30 Gew.-% eines kautschukelastischen Polymerisates,
D) 0 bis 30 Gew.-% üblicher Zusatzstoffe und Verarbeitungshilfsmittel,

wobei die Gewichtsprozente der Komponenten A) bis D) zusammen 100 % ergeben.

Weiterhin betrifft die EP 0 667 367 A2 die Verwendung dieser Formmassen zur Herstellung von Fasern, Folien und Formkörpern. Die beschriebenen Copolyamide weisen bereits eine akzeptable Glasübergangstemperatur bei einer hohen Kristallinität und einem ausreichend hohen Schmelzpunkt auf.

Es besteht weiter ein Bedarf an teilaromatischen Copolyamiden für Polyamid-Formmassen, die über ein verbessertes Eigenschaftsprofil bezüglich ihrer Verarbeitbarkeit und der erhaltenen mechanischen Eigenschaften bei hohen Temperaturen verfügen.

Der vorliegenden Erfindung liegt die Aufgabe zu Grunde, teilaromatische Copolyamide mit verbesserten Eigenschaften zur Verfügung zu stellen. Diese sollen sich speziell zur Herstellung von Polyamid-Formmassen eignen, aus denen bevorzugt Bauteile für die Automobilindustrie sowie den Elektro-/Elektronikbereich hergestellt werden.

Überraschenderweise wurde gefunden, dass beim Einsatz höherer Mengen wenigstens eines cyclischen Diamins als in der EP 0 667 367 A2 beschrieben, Copolyamide mit wesentlich höheren Glasübergangstemperaturen erzielt werden, bei hoher Kristallinität und gleichbleibend hohem Schmelzpunkt. Die so erhaltenen Copolyamide sind somit bei gleichen Temperaturen verarbeitbar, zeichnen sich aber durch bessere mechanische Eigenschaften bei hohen Temperaturen aus. Dies gilt insbesondere dann, wenn die Aminkomponente der Copolyamide Isophorondiamin umfasst oder aus Isophorondiamin besteht.

ZUSAMMENFASSUNG DER ERFINDUNG

Ein erster Gegenstand der Erfindung ist ein teilaromatisches Copolyamid PA), enthaltend in einpolymerisierter Form:

a) 36 bis 50 Mol% Terephthalsäure,
b) 0 bis 14 Mol% Isophthalsäure,
c) 35 bis 42,5 Mol% Hexamethylendiamin,
d) 7,5 bis 15 Mol% wenigstens eines cyclischen Diamins,

wobei die Komponenten a) bis d) zusammen 100 Mol% ergeben.

Ein weiterer Gegenstand der Erfindung sind Polyamid-Formmassen, die ein teilaromatisches Copolyamid, wie zuvor und im Folgenden definiert, enthalten.

Ein weiterer Gegenstand der Erfindung ist die Verwendung eines teilaromatischen Copolyamids zur Herstellung von Polyamid-Formmassen, die insbesondere zur Herstellung von Bauteilen für Automobil-Anwendungen im Hochtemperaturbereich sowie den Elektro-/Elektronikbereich dienen.

BESCHREIBUNG DER ERFINDUNG

Die im Rahmen dieser Anmeldung beschriebenen Glasübergangstemperaturen (Tg), Schmelztemperaturen (Tm) und Schmelzwärmen ($\Delta H$) können mittels Differential Scanning Calorimetry (DSC) bestimmt werden. Die Bestimmung kann in an sich bekannter Weise erfolgen (DIN EN ISO 11357, Teile 1 bis 3). Der Index (2) bei Schmelzenthalpie $\Delta H_2$, Glasübergangstemperatur $T_{g2}$ und Schmelztemperatur $T_{m2}$ bedeutet, dass es sich um die zweite Messung handelt (1. Wiederholung), d. h. die Probe des Copolyamids PA wird durch die Durchführung einer ersten DSC-Messung, bei der die Probe auf Schmelztemperatur erhitzt wird, konditioniert. Die Bestimmung erfolgt unter Stickstoff in offenen Tiegeln bei einer Aufheizrate im Bereich von etwa 20 K/min.

Die Monomere der Säure- und der Diaminkomponenten bilden durch die Kondensation Wiederholungseinheiten bzw. Endgruppen in Form von Amiden aus, die von den jeweiligen Monomeren abgeleitet sind. Diese machen in der Regel 95 Mol-%, insbesondere 99 Mol-% aller im Copolyamid vorliegenden Wiederholungseinheiten und Endgruppen aus. Daneben kann das Copolyamid auch geringe Mengen anderer Wiederholungseinheiten aufweisen, die aus Abbau- oder Nebenreaktionen der Monomere, beispielsweise der Diamine, resultieren können.

Für die erfindungsgemäß eingesetzten Monomere werden folgende Kurzzeichen verwendet:
6 = Hexamethylendiamin, T = Terephthalsäure, I = Isophthalsäure, MXDA = m-Xylylendiamin, IPDA= Isophorondiamin

Bevorzugt enthält das teilaromatische Copolymer 40 bis 50 Mol% Terephthalsäure a) einpolymerisiert.

Bevorzugt enthält das teilaromatische Copolymer 0 bis 10 Mol% Isophthalsäure b) einpolymerisiert.

Bevorzugt enthält das teilaromatische Copolymer 35 bis 40 Mol% Hexamethylendiamin c) einpolymerisiert.

Bevorzugt enthält das teilaromatische Copolymer 10 bis 15 Mol% wenigstens eines cyclischen Diamins d) einpolymerisiert.

Das cyclische Diamin d) ist vorzugsweise ausgewählt unter Isophorondiamin (IPDA), Bis-(3-methyl-4-aminocyclohexyl)methan (MACM), 4,4'-(Aminocyclohexyl)methan (PACM), m-Xylylendiamin, p-Xylylendiamin und Mischungen davon.

Besonders bevorzugt umfasst das cyclische Diamin d) Isophorondiamin oder besteht aus Isophorondiamin.

Das erfindungsgemäße Copolyamid ist vorzugsweise ausgewählt ist unter 6.T/IPDA.T und 6.T/6.I/IPDA.T/IPDA.I.

Das erfindungsgemäße Copolyamid enthält vorzugsweise Terephthalsäure und Isophthalsäure in einem Molmengenverhältnis von 100 : 0 bis 80 : 20 einpolymerisiert.

Das erfindungsgemäße Copolyamid enthält vorzugsweise Hexamethylendiamin und wenigstens ein cyclisches Diamin in einem Molmengenverhältnis von 70 : 30 bis 85 : 15 einpolymerisiert.

In einer besonders bevorzugten Ausführungsform enthält das erfindungsgemäße Copolyamid Hexamethylendiamin und Isophorondiamin in einem Molmengenverhältnis von 75 : 25 bis 85 : 15 einpolymerisiert.

Das erfindungsgemäße Copolyamid weist vorzugsweise eine Glasübergangstemperatur $T_{g2}$ (bestimmt beim 2. Aufheizen) von wenigstens 145 °C, bevorzugt von wenigstens 150 °C, auf.

Das erfindungsgemäße Copolyamid weist vorzugsweise eine Glasübergangstemperatur $T_{g2}$ von wenigstens 145 °C, bevorzugter von wenigstens 150 °C, besonders bevorzugt von wenigstens 153 °C, insbesondere von wenigstens 160 °C, auf. Ein geeigneter Wertebereich ist z. B. von 145 bis 175 °C, bevorzugt von 150 bis 175 °C.

Das erfindungsgemäße Copolyamid weist vorzugsweise eine Schmelzwärme $\Delta H_2$ von wenigstes 40 J/g auf. Bevorzugt liegt die Schmelzwärme $\Delta H_2$ oberhalb von 50 J/g.

Das erfindungsgemäße Copolyamid weist vorzugsweise einen Aminendgruppengehalt (AEG) von 50 bis 100 mol/g auf.

Das erfindungsgemäße Copolyamid weist vorzugsweise eine Viskositätszahl von 80 bis 120 ml/g auf. Die Viskositätszahl (Staudinger-Funktion, bezeichnet mit VZ, VN oder J) ist definiert als $VZ = 1 / c \times (\eta - \eta_s) / \eta_s$. Die Viskositätszahl steht in direkter Beziehung zur mittleren molaren Masse des Copolyamids und gibt Auskunft über die Verarbeitbarkeit eines Kunststoffes. Die Bestimmung der Viskositätszahl kann nach EN ISO 307 mit einem Ubbelohde-Viskosimeter erfolgen.

Das erfindungsgemäße Copolyamid weist vorzugsweise ein zahlenmittleres Molekulargewicht $M_n$ in einem Bereich von 13000 bis 25000 g/mol, besonders bevorzugt von 15000 bis 20000 g/mol, auf.

Das erfindungsgemäße Copolyamid weist vorzugsweise ein gewichtsmittleres Molekulargewicht $M_w$ in einem Bereich von 25000 bis 125000 auf.

Die Angaben des zahlenmittleren Molekulargewichts $M_n$ und des gewichtsmittleren Molekulargewichts $M_w$ im Rahmen dieser Erfindung beziehen sich auf eine Bestimmung mittels Gelpermeationschromatographie (GPC). Zur Kalibrierung wird PMMA als Polymerstandard mit einer niedrigen Polydispersität eingesetzt.

Das erfindungsgemäße Copolyamid weist vorzugsweise eine Polydispersität PD ($= M_w/M_n$) von höchstens 6, besonders bevorzugt von höchstens 5, insbesondere von höchstens 3,5, auf.

Die erfindungsgemäßen teilaromatischen Polyamide können grundsätzlich nach üblichen, dem Fachmann bekannten Verfahren hergestellt werden. Die Herstellung von teilaromatischen Polyamiden beginnt in der Regel mit der Bildung einer wässrigen Salzlösung aus wenigstens einem Diamin und wenigstens einer Dicarbonsäure. An die Bildung der Salzlösung schließt sich dann eine Oligomerisierung in der flüssigen wässrigen Phase an. Für den angestrebten Molekulargewichtsaufbau muss dann im Verlauf des weiteren Verfahrens Wasser entfernt und die Reaktionstemperatur erhöht werden. Zum weiteren Molekulargewichtsaufbau stehen prinzipiell zwei alternative Routen zur Verfügung. In der ersten Variante wird das gebildete Oligomer durch Entwässerung in die feste Phase überführt und einer sogenannten Festphasenpolymerisation (solid state polymerization, SSP) unterzogen. In der zweiten Variante erfolgt unter kontrollierter Wasserabtrennung und Temperaturerhöhung eine Überführung der wässrigen Lösung in die Schmelze zur weiteren Polykondensation. Zum weiteren Molekulargewichtsaufbau kann sich dann, soweit erforderlich, noch eine Nachpolymerisation, z. B. in einem Extruder, anschließen.

In der Folge sollen einige der möglichen Verfahren beispielhaft aufgeführt werden, wobei der Offenbarungsgehalt dieser Dokumente hinsichtlich der Herstellung der teilaromatischen Copolyamide vollständig in den Offenbarungsgehalt der vorliegenden Anmeldung eingeschlossen wird.

Ein geeignetes Verfahren ist z. B. in der EP 0 693 515 A1 beschrieben. Dabei erfolgt die Herstellung von Vorkondensaten teilaromatischer Polyamide in einem mehrstufigen Chargenprozess, der die folgenden Stufen a) bis e) umfasst:

a) eine Salzbildungsphase zur Herstellung von Salz(en) aus Diamin(en) und Dicarbonsäure(n) und gegebenenfalls partielle Vorreaktion zu niedermolekularen Oligoamiden bei Temperaturen zwischen 120 °C und 220 °C und Drücken von bis zu 23 bar,

b) gegebenenfalls die Überführung der Lösung aus Stufe a) in ein zweites Reaktionsgefäß bzw. einen Rührautoklaven unter den am Ende ihrer Herstellung herrschenden Bedingungen,

c) die Reaktionsphase, während der die Umsetzung zu den Vorkondensaten vorangetrieben wird, durch Aufheizen des Reaktorinhaltes auf eine vorgegebene Temperatur und kontrolliertes Einstellen des Wasserdampfpartialdruckes auf einen vorgegebenen Wert, der durch kontrolliertes Ablassen von Wasserdampf oder gegebenenfalls kontrollierte Einspeisung von Wasserdampf aus einem mit dem Autoklaven verbundenen Wasserdampferzeuger aufrechterhalten wird,

d) eine für mindestens 10 Minuten aufrechtzuerhaltende stationäre Phase, bei der die Temperatur des Reaktorinhalts und der Wasserdampfpartialdruck jeweils auf die Werte eingestellt werden, welche für die Überführung der Vorkondensate in die nachfolgende Prozessstufe vorgesehen sind,

wobei im Falle von Vorkondensaten teilkristalliner (Co-)Polyamide mit einem Schmelzpunkt von mehr als 280 °C die Temperatur des Reaktorinhalts während der Phasen c) und d) 265 °C nicht überschreiten darf und für die besagten teilkristallinen (Co-)Polyamide während der Phasen c) und d) bestimmte genauer definierte Randbedingungen in Bezug auf die Abhängigkeit des mindestens anzuwendenden Wasserdampfpartialdruckes $P_{H2O}$ (minimum) von der Temperatur des Reaktorinhalts und der Amidgruppenkonzentration des Polymeren einzuhalten sind, und

e) eine Austragsphase, während der die Vorkondensate entweder direkt im schmelzflüssigen Zustand oder nach Durchlaufen des festen Zustandes und gegebenenfalls weiterer Verfahrensstufen einer Endreaktionsvorrichtung zugeführt werden können.

Die EP 0976774 A2 beschreibt ein Verfahren zur Herstellung von Polyamiden, umfassend die folgenden Schritte:

i) Polykondensation einer Dicarbonsäurekomponente, die Terephthalsäure enthält, und einer Diaminkomponente mit einem Gehalt an 1,9-Nonandiamin und/oder 2-Methyl-1,8-octandiamin von 60 bis 100 Mol% in Gegenwart 15 bis 35 Gew.-% Wasser bei einer Reaktionstemperatur von 250 bis 280 °C und einem Reaktionsdruck, der folgende Gleichung erfüllt:

$$P_0 \geq P \geq 0{,}7\, P_0$$

wobei $P_0$ für den Sättigungsdampfdruck von Wasser bei der Reaktionstemperatur steht, unter Erhalt eines primären Polykondensats,

(ii) Austragen des primären Polykondensats aus Schritt i) in einer atmosphärischen Umgebung mit demselben Temperaturbereich und bei demselben Wassergehalt wie in Schritt i),

(iii) Molekulargewichtsaufbau, indem man den Austrag aus Schritt ii) einer Festphasenpolymerisation oder einer Schmelzepolymerisation unterzieht.

Die EP 0 129 195 A1 beschreibt ein Verfahren zur kontinuierlichen Herstellung von Polyamiden, bei dem man in einer Verdampferzone eine wässrige Lösung von Salzen aus Dicarbonsäuren und Diaminen unter erhöhtem Druck unter gleichzeitiger Verdampfung von Wasser und Bildung eines Präpolymeren auf eine Temperatur von 250 bis 300 °C erhitzt, Präpolymer und Dampf kontinuierlich trennt, die Dämpfe rektifiziert und mitgeführte Diamine zurückleitet, das Präpolymere in eine Polykondensationszone leitet und unter einem Überdruck von 1 bis 10 bar bei einer Temperatur von 250 bis 300 °C kondensiert, wobei man die wässrige Salzlösung unter einem Überdruck von 1 bis 10 bar innerhalb einer Verweilzeit von höchstens 60 Sekunden erhitzt mit der Maßgabe, dass bei Austritt aus der Verdampferzone der Umsetzungsgrad mindestens 93 % beträgt und der Wassergehalt des Präpolymeren höchstens 7 Gew.-% beträgt.

Die EP 0 129 196 A1 beschreibt ein zur EP 0 129 195 A1 vergleichbares Verfahren, bei dem man die wässrige Salzlösung im ersten Drittel einer rohrförmigen, mit Einbauten versehenen Vorkondensationszone unter einem Überdruck von 1 bis 10 bar bis zu einem Umsetzungsgrad von mindestens 93 % kondensiert und in den restlichen zwei Dritteln der Vorkondensationszone das Präpolymere und die Dampfphase intensiv miteinander in Berührung bringt.

Die WO 02/28941 beschreibt ein kontinuierliches Verfahren zur hydrolytischen Polymerisation von Polyamiden, umfassend:

a) Polymerisation einer wässrigen Salzlösung aus Disäuren und Diaminen unter Temperatur- und Druckbedingungen, die geeignet sind, ein mehrphasiges Reaktionsgemisch zu bilden, wobei die Reaktionszeit jedoch so gewählt wird, dass eine Phasentrennung vermieden wird,

b) Wärmeeintrag in das Reaktionsgemisch bei gleichzeitiger Druckverringerung, um Wasser zu entfernen, ohne dass es zu einer Feststoffbildung kommt,

c) weitere Polymerisation des entwässerten Reaktionsgemischs bis zum angestrebten Molekulargewicht.

Die US 4,019,866 beschreibt ein Verfahren und eine Vorrichtung zur kontinuierlichen Polyamidherstellung. Nach dem Verfahren werden die Polyamid bildenden Reaktanden kontinuierlich in eine Reaktionszone eingepumpt, die so ausgelegt ist, dass ein rasches Erhitzen und gleichmäßiges Durchmischen ermöglicht sind. Die Reaktanden werden erhitzt und innerhalb der Reaktionszone für eine vorher bestimmte Haltezeit bei einer erhöhten Temperatur und einem erhöhten Druck gleichmäßig vermischt und so ein Dampf und ein Präpolymer gebildet. Der gebildete Dampf wird kontinuierlich von den Präpolymeren abgetrennt und die Präpolymere aus der Reaktionszone abgezogen. Die eingesetzte Vorrichtung ist kolonnenartig ausgestaltet und umfasst eine Rektifizierzone, eine erste und eine zweite Reaktionszone. In der ersten Reaktionszone wird eine Polyamid-bildende Salzlösung teilweise verdampft und teilweise umgesetzt und in der zweiten Reaktionszone die Reaktion bei einem niedrigeren Druck als in der ersten Reaktionszone fortgeführt. Der Dampf aus der ersten Reaktionszone wird durch die Rektifizierzone abgelassen.

Die EP 0 123 377 A2 beschreibt ein Kondensationsverfahren, das unter Anderem zur Herstellung von Polyamiden dient. Danach wird eine Salzlösung oder ein Präpolymer in einem Verdampfungsreaktor bei einem relativen Druck (Überdruck) von 0 bis 27,6 bar entspannt. Die Verweilzeit im Verdampfungsreaktor beträgt 0,1 bis 20 Sekunden. In einer speziellen Ausführung erfolgt zunächst eine Präpolymerisation bei einer Temperatur von 191 bis 232 °C und einem Lösungsmittelgehalt (Wassergehalt) von weniger als 25 Gew.-%. Die resultierende Salzlösung wird dann auf einen relativen Druck von 103,4 bis 206,8 bar gebracht, erst dann wird die Temperatur auf einen Wert oberhalb der Schmelztemperatur erhöht und die Lösung entspannt. Das Polymer kann in einen Doppelschneckenextruder eingespeist und dort einer Polymerisation bei einer Verweilzeit von etwa 45 Sekunden bis 7 Minuten unterzogen werden.

Die DE 4329676 A1 beschreibt ein Verfahren zur kontinuierlichen Polykondensation von hochmolekularen, insbesondere amorphen, teilaromatischen Copolyamiden, wobei zunächst aus einer wässrigen Reaktionsmischung unter Erwärmen und bei mindestens 15 bar Druck ein Vorkondensat hergestellt wird, nachfolgend unter Erhöhung von Temperatur und Druck ein Präpolymer und schließlich durch Kondensation in einem Entgasungsextruder das Copolyamid hergestellt wird. Dabei wird bereits in der Vorkondensationsstufe der Wassergehalt verringert und beträgt am Ende der Vorkondensation etwa 5 bis 40 Gew.-%. Die Herstellung des Präpolymers erfolgt dann bei 220 bis 350 °C und einem Druck von mindestens 20 bar. Die Nachpolymerisation wird dann in einem Doppelschneckenextruder mit Entgasungszonen durchgeführt.

Zur Herstellung der erfindungsgemäßen Polyamide kann wenigstens ein Katalysator eingesetzt werden. Geeignete Katalysatoren sind vorzugsweise ausgewählt unter anorganischen und/oder organischen Phosphor-, Zinn- oder Bleiverbindungen und deren Mischungen.

Als Katalysatoren geeignete Zinnverbindungen sind z. B. Zinn(II)-oxid, Zinn(II)-hydroxid, Zinn(II)-Salze einoder mehrwertige Carbonsäuren, z. B. Zinn(II)-dibenzoat, Zinn(II)-di(2-ethylhexanoat), Zinn(II)-oxalat, Dibutylzinnoxid, Butylzinnsäure($C_4H_9$-SnOOH), Dibutyl-Zinn-dilaurat, etc. Geeignete Bleiverbindungen sind z. B. Blei(II)-oxid, Blei(II)-hydroxid, Blei(II)-acetat, basisches Blei(II)-acetat, Blei(II)-carbonat, etc.

Bevorzugte Katalysatoren sind Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z. B. Na, K, Mg, Ca, Zn oder Al und/oder deren Ester wie z. B. Triphenylphosphat, Triphenylphosphit oder Tris-(nonylphenyl)-phosphit. Besonders bevorzugt als Katalysator sind hypophosphorige Säure und deren Salze wie Natriumhypophosphit.

Bevorzugt werden die Katalysatoren in einer Menge von 0,005 bis 2,5 Gewichtsprozent, bezogen auf das Gesamtgewicht der Komponenten a) bis d), eingesetzt.

Besonders bevorzugt werden hypophosphorige Säure und/oder ein Salz in einer Menge von 50 bis 1000 ppm, besonders bevorzugt von 100 bis 500 ppm, bezogen die Gesamtmenge der Komponenten a) bis d), eingesetzt.

Zur Regelung der Molmasse kann wenigstens ein Kettenregler eingesetzt werden, der vorzugsweise ausgewählt ist unter Monocarbonsäuren und Monoaminen. Bevorzugt ist der Kettenregler ausgewählt unter Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-tert-butyl-4-hydroxyphenyl)propansäure, 3,5-di-tert-butyl-4-hydroxybenzoesäure, 3-(3-tert-butyl-4-hydroxy-5-methylphenyl)propansäure, 2-(3,5-di-tert-butyl-4-hydroxybenzylthio)essigsäure, 3,3-bis(3-tert-butyl-4-hydroxyphenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)propylamin, Methylcyclohexylamin, Dimethylcyclohexylamin, Benzylamin, 2-Phenylethylamin, 2,2,6,6-tetramethylpiperidin-4-amin, 1,2,2,6,6-Pentamethylpiperidin-4-amin, 4-Amino-2,6-di-tert-butylphenol und Mischungen davon. Es können auch andere monofunktionelle Verbindungen als Regler eingesetzt werden, die mit einer Amino- oder Säuregruppe reagieren können, wie Anhydride, Isocyanate, Säurehalogenide oder Ester. Der Kettenregler kann dem Reaktionsgemisch vor oder zu Beginn der Oligomerisierung und/oder dem Präpolymer vor der Nachpolymerisation zugesetzt werden. Die übliche Einsatzmenge der Kettenregler liegt in einem Bereich von 5 bis 500 mmol pro kg zur Polyamidbildung eingesetzter Komponenten, vorzugsweise 10 bis 200 mmol pro kg zur Polyamidbildung eingesetzter Komponenten.

In einer speziellen Ausführungsform wird zur Herstellung der erfindungsgemäßen Copolyamide eine wässrige Zusammensetzung aus Terephthalsäure a), Isophthalsäure b), Hexamethylendiamin c) und wenigstens einem cyclischen Diamin d) bereitgestellt und einer Salzbildung unterzogen. Gewünschtenfalls können dieser Lösung weitere Komponenten, wie Katalysatoren, Kettenregler und davon verschiedene Additive zugesetzt werden. Geeignete Additive werden im Folgenden bei den Polyamid-Formmassen ausführlich beschrieben. Zu den Additiven, die auch bereits bei der Herstellung der erfindungsgemäßen Polyamide zugesetzt werden können, zählen z. B. Antioxidantien, Lichtschutzmittel, übliche Verarbeitungshilfsmittel, Nukleierungsmittel und Kristallisationsbeschleuniger. Diese können den erfindungsgemäßen Polyamiden im Allgemeinen in jeder Stufe der Herstellung zugesetzt werden. Es ist auch möglich, bereits bei der Herstellung der erfindungsgemäßen Polyamide Füll- und Verstärkungsstoffe einzusetzen. Füll- und Verstärkungsstoffe werden vorzugsweise vor und/oder während der abschließenden Nachpolymerisation zugegeben. So können diese z. B. den erfindungsgemäßen Copolyamiden bei der Nachpolymerisation in einem Extruder oder Kneter zugegeben werden. In diesem Fall ist es vorteilhaft, wenn der Extruder geeignete Mischelemente, wie Knetblöcke, aufweist.

Diese zur Herstellung der erfindungsgemäßen Copolyamide bereitgestellte Zusammensetzung weist vorzugsweise einen Wassergehalt von 20 bis 55 Gew.-%, besonders bevorzugt von 25 bis 50 Gew.-%, bezogen auf das Gesamtgewicht der Lösung, auf.

Die Herstellung der wässrigen Zusammensetzung kann in einer üblichen Reaktionsvorrichtung, z. B. einem Rührkessel, erfolgen. Vorzugsweise erfolgt das Vermischen der Komponenten unter Erwärmung. Bevorzugt erfolgt die Herstellung der wässrigen Zusammensetzung unter Bedingungen, bei denen im Wesentlichen noch keine Oligomerisierung erfolgt. Bevorzugt liegt die Temperatur bei der Herstellung der wässrigen Zusammensetzung in Schritt a) in einem Bereich von 80 bis 170 °C, besonders bevorzugt von 100 bis 165 °C. Bevorzugt erfolgt die Herstellung der wässrigen Zusammensetzung bei Umgebungsdruck oder unter erhöhtem Druck. Bevorzugt liegt der Druck in einem Bereich von 0,9 bis 50 bar, besonders bevorzugt von 1 bis 10 bar. In einer speziellen Ausführung erfolgt die Herstellung der wässrigen Zusammensetzung beim Eigendruck der Reaktionsmischung. Die Herstellung der wässrigen Zusammensetzung kann in einer Inertgasatmosphäre erfolgen. Geeignete Inertgase sind z. B. Stickstoff, Helium oder Argon. In vielen Fällen ist eine vollständige Inertisierung nicht erforderlich, sondern bereits ein Spülen der Reaktionsvorrichtung mit einem Inertgas vor der Erwärmung der Komponenten ausreichend. In einer geeigneten Vorgehensweise zur Herstellung der wässrigen Zusammensetzung wird die Diamin-Komponente in wenigstens einem Teil des Wassers gelöst in der Reaktionsvorrichtung vorgelegt. Anschließend werden die übrigen Komponenten, vorzugsweise unter Rühren, zugegeben und der Wassergehalt auf die gewünschte Menge eingestellt. Die Reaktionsmischung wird unter Rühren erwärmt, bis eine klare homogene Lösung entstanden ist. Die so erhaltene wässrige Zusammensetzung wird vorzugsweise im Wesentlichen bei der Herstellungstemperatur, d. h. ohne eine Zwischenkühlung, zur Oligomerisierung eingesetzt.

Die Oligomerisierung unter Bildung von Präpolymeren und die Nachpolymerisation zum Molekulargewichtsaufbau kann nach üblichen, dem Fachmann bekannten Verfahren erfolgen. Einige Beispiele für solche Verfahren wurden weiter oben bereits erwähnt.

Die erfindungsgemäßen teilaromatischen Copolyamide können vor ihrer Verarbeitung zu Polyamid-Formmassen einer Formgebung unterzogen werden, bei der Polyamidteilchen erhalten werden. Bevorzugt wird das Polyamid zuerst zu einem oder mehreren Strängen geformt. Dazu können dem Fachmann bekannte Vorrichtungen verwendet werden, z. B. Extruder, die austragsseitig z. B. Lochplatten, Düsen oder Düsenplatten aufweisen. Bevorzugt wird das teilaromatische Polyamid in fließfähigem Zustand zu Strängen geformt und als fließfähiges strangförmiges Reaktionsprodukt oder nach Abkühlung einer Granulierung unterzogen.

## Polyamid-Formmasse

Ein weiterer Gegenstand der Erfindung ist eine Polyamid-Formmasse, die wenigstens ein erfindungsgemäßes teilaromatisches Copolyamid enthält.

Bevorzugt ist eine Polyamid-Formmasse, enthaltend:

A) 25 bis 100 Gew.-% wenigstens eines teilaromatischen Copolyamids, wie zuvor definiert,
B) 0 bis 75 Gew.-% wenigstens eines Füll- und Verstärkungsstoffs,
C) 0 bis 50 Gew.-% wenigstens eines Additivs,

wobei die Komponenten A) bis C) zusammen 100 Gew.-% ergeben.

Der Begriff "Füllstoff und Verstärkungsstoff" (= Komponente B) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), carbon black, nanoskalige Schichtsilikate, nanoskaliges Aluminiumoxid ($Al_2O_3$), nanoskaliges Titandioxid ($TiO_2$), Graphen, dauerhaft magnetische bzw. magnetisierbare Metallverbindungen und/oder Legierungen, Schichtsilikate und nanoskaliges Siliciumdioxid ($SiO_2$), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern, Metallfasern oder Kaliumtitanatfasern.

Speziell werden Schnittglasfasern eingesetzt. Insbesondere umfasst die Komponente B) Glas- und/oder Kohlenstofffasern, wobei bevorzugt Kurzfasern eingesetzt werden. Diese weisen vorzugsweise eine Länge im Bereich von 2 bis 50 mm und einem Durchmesser von 5 bis 40 $\mu$m auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"-oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d. h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 $\mu$m, bevorzugt von 12 bis 18 $\mu$m, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden.

Die erfindungsgemäßen Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren, wie z. B. Spritzgießen oder Pressen, zu Formteilen weiterverarbeitet werden.

Die erfindungsgemäße Polyamid-Formmasse enthält bevorzugt 25 bis 75 Gew.-%, besonders bevorzugt 33 bis 60 Gew.-%, mindestens eines Füll- und Verstärkungsstoffs B), bezogen auf das Gesamtgewicht der Polyamid-Formmasse.

Geeignete Additive C) sind Wärmestabilisatoren ,Flammschutzmittel, Lichtschutzmittel (UV-Stabilisatoren, UV-Absorber oder UV-Blocker), Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, etc.

Als Komponente C) enthalten die erfindungsgemäßen Formmassen vorzugsweise 0,01 bis 3 Gew.-%, besonders bevorzugt 0,02 bis 2 Gew.-%, insbesondere 0,1 bis 1,5 Gew.-% mindestens eines Wärmestabilisators.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten A) bis C).

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt von 0,2 bis 1,5 Gew.-%, bezogen auf die Summe der Komponenten A) bis C).

Sofern Stabilisatoren auf Basis sterisch gehinderter Phenole verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Geeignete Verbindungen C) des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, Cul, CuCN und Cu$_2$O sowie die zweiwertigen Kupferverbindungen CuCl$_2$, Cu-SO$_4$, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, Kl, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolensäure, Naugard ® 445, N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox ® PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von Cul und KI. Eine kommerziell erhältliche Stabilisatormischung, bestehend aus organischen Stabilisatoren und Epoxiden ist beispielsweise Irgatec NC66 von BASF SE. Insbesondere bevorzugt wird eine Wärmestabilisierung ausschließlich auf Basis von Cul und KI. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems, ausgeschlossen. Darüber hinaus werden der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt.

Die erfindungsgemäßen Formmassen enthalten vorzugsweise 0 bis 30 Gew.-%, besonders bevorzugt 0 bis 20 Gew.-%, bezogen auf das Gesamtgewicht der Komponenten A) bis C), mindestens eines Flammschutzmittels als Additiv C). Wenn die erfindungsgemäßen Formmassen mindestens ein Flammschutzmittel enthalten, so vorzugsweise in einer Menge von 0,01 bis 30 Gew.-%, besonders bevorzugt von 0,1 bis 20 Gew.-%, bezogen auf das Gesamtgewichten der Komponenten A) bis C). Als Flammschutzmittel C) kommen halogenhaltige und halogenfreie Flammschutzmittel und deren Synergisten in Frage (siehe auch Gächter/Müller, 3. Ausgabe 1989 Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim, sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP 1095030), Ammoniumpolyphosphat, Trishydroxyethylisocyanurat (gegebenenfalls auch Ammoniumpolyphosphat in Mischung mit Trishydroxyethylisocyanurat) (EP584567). Weitere N-haltige oder P-haltige Flammschutzmittel oder als Flammschutzmittel geeignete PN-Kondensate können der DE 10 2004 049 342 entnommen werden, ebenso die hierfür üblichen Synergisten wie Oxide oder Borate. Geeignete halogenhaltige Flammschutzmittel sind z.B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (Für Einzelheiten und weitere Flammschutzmittel:

siehe DE-A-10 2004 050 025).

Als Antistatika können in den erfindungsgemäßen Formmassen z. B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein.

Formkörper

Des Weiteren betrifft die vorliegende Erfindung Formkörper, die unter Verwendung von den erfindungsgemäßen Copolyamiden bzw. Polyamid-Formmassen hergestellt werden.

Die erfindungsgemäßen teilaromatischen Polyamide eignen sich vorteilhaft für eine Verwendung zur Herstellung von Formteilen für Elektro- und Elektronikbauteilen und für Automobil-Anwendungen im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Eine weiter spezielle Ausführungsform sind Formkörper als oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die erfindungsgemäßen teilaromatischen Polyamide eignen sich weiterhin speziell für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Eine spezielle Ausführungsform sind Formkörper als Befestigungselemente elektrischer oder elektronischer Bauteile, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre, Scheibenwischer sowie Karosserieaußenteile möglich.

Für den Küchen- und Haushaltsbereich ist der Einsatz fließverbesserter Polyamide zur Herstellung von Komponenten für Küchengeräte, wie z. B. Fritteusen, Bügeleisen, Knöpfe, sowie Anwendungen im Garten-Freizeitbereich, z. B. Komponenten für Bewässerungssysteme oder Gartengeräte und Türgriffe, möglich.

Die folgenden Beispiele dienen der Verdeutlichung der Erfindung, ohne sie in irgendeiner Weise zu beschränken.

BEISPIELE

Die Herstellung der Polyamide erfolgt durch Kondensation in der Schmelze in einem gerührten Druckautoklaven. Hierzu werden die jeweiligen Diamine und Dicarbonsäuren eingewogen und anschließend 0,03 Gew.-% Natriumhypophosphit als Katalysator zugegeben. Der Wassergehalt betrug 15 Gew.-% Nachdem der Autoklav mehrere Male mit Stickstoff gespült wurde, wird die Außentemperatur auf 345 °C eingestellt. Nachdem der Druck im Inneren des Autoklaven 40 bar erreicht hat, wird innerhalb von 28 min auf Umgebungsdruck entspannt. Das so erhaltene Polymer wird unter ständigem Stickstoffstrom für 15 min nachkondensiert und anschließend durch das Auslassventil als Strang abgelassen und granuliert.

Die in der Tabelle 1 enthaltenen Glasübergangstemperaturen ($Tg_2$), Schmelztemperaturen ($Tm_2$) und Schmelzwärmen ($\Delta H_2$) wurden mittels Differential Scanning Calorimetry (DSC) bestimmt. Die DSC-Messung wird an ein- und derselben Probe zweckmäßigerweise ein- bis zweimal wiederholt, um eine definierte thermische Vorgeschichte des jeweiligen Polyamids sicherzustellen. In der Regel werden die Werte der zweiten Messung angegeben. Dies ist durch den Index "2" an den Messwerten angezeigt ($Tg_2$), ($Tm_2$), ($\Delta H_2$). Es wurde jeweils mit einer Aufheiz- und Abkühlrate von 20 K/min gemessen.

Tabelle 1

| Beispiel-Nr. | Zusammensetzung Polyamid | $Tg_2$ [°C] | $T_{m2}$ [°C] | $\Delta H$ [J/g] |
|---|---|---|---|---|
| Vergleich 1 | 6.T/6.I/IPDA.T/IPDA.I<br>(T : I = 70 : 30)<br>(6 : IPDA = 97.5 : 2,5) | 135,0 | 307,0 | 51 |
| Vergleich 2 | 6.T/6.I/IPDA.T/IPDA.I<br>(T : I = 70 : 30)<br>(6 : IPDA = 95 : 5) | 143,0 | 305,0 | 30 |
| Vergleich 3 | 6.T/6.I/IPDA.T/IPDA.I<br>(T : I = 76 : 24)<br>(6: IPDA= 90 : 10) | 141,0 | 305,0 | 57 |
| 1 | 6.T/6.I/IPDA.T/IPDA.I<br>(T : I = 82 : 18)<br>(6 : IPDA = 85 : 15) | 154,0 | 318,0 | 44 |
| 2 | 6.T/6.I/IPDA.T/IPDA.I<br>(T : I = 85 : 15)<br>(6 : IPDA= 80 : 20) | 162,0 | 310,0 | 48 |
| 3 | 6.T/6.I/IPDA.T/IPDA.I<br>(T : I = 88 : 12)<br>(6 : IPDA = 75 : 25) | 161,0 | 313,0 | 49 |
| 4 | 6.T/IPDA.T<br>(6: IPDA= 70 : 30) | 166,0 | 316,0 | 44 |
| 5 | 6.T/6.I/PACM.T/PACM.I<br>(T : I = 82 : 18)<br>(6 : PACM = 85 : 15) | 149,0 | 313,0 | 42,0 |
| 6 | 6.T/6.I/MACM.T/MACM.I<br>(T : I = 82 : 18)<br>(6 : MACM = 85 : 55) | 149,0 | 319,0 | 48,0 |

**Patentansprüche**

1. Teilaromatisches Copolyamid PA), enthaltend in einpolymerisierter Form:

   a) 36 bis 50 Mol% Terephthalsäure,
   b) mehr als 0 bis 14 Mol% Isophthalsäure,
   c) 35 bis 42,5 Mol% Hexamethylendiamin,
   d) 7,5 bis 15 Mol% wenigstens eines cyclischen Diamins, wobei das cyclische Diamin d) Isophorondiamin umfasst oder aus Isophorondiamin besteht,

   wobei die Komponenten a) bis d) zusammen 100 Mol% ergeben.

2. Copolyamid nach Anspruch 1, das Terephthalsäure und Isophthalsäure in einem Molmengenverhältnis von weniger als 100 : mehr als 0 bis 80 : 20 einpolymerisiert enthält.

3. Copolyamid nach einem der vorhergehenden Ansprüche, das Hexamethylendiamin und wenigstens ein cyclisches Diamin in einem Molmengenverhältnis von 75 : 25 bis 85 : 15 einpolymerisiert enthält.

4. Copolyamid nach einem der vorhergehenden Ansprüche, das Hexamethylendiamin und Isophorondiamin in einem Molmengenverhältnis von 75 : 25 bis 85 : 15 einpolymerisiert enthält.

5. Copolyamid nach einem der vorhergehenden Ansprüche, das eine Glasübergangstemperatur $Tg_2$ von wenigstens 150 °C, aufweist.

6. Copolyamid nach einem der vorhergehenden Ansprüche, das eine Schmelzwärme $\Delta H_2$ von wenigstens 40 J/g aufweist.

7. Polyamid-Formmasse, enthaltend wenigstens ein Copolyamid, wie in einem der Ansprüche 1 bis 6 definiert.

8. Polyamid-Formmasse nach Anspruch 7, enthaltend:

    A) 25 bis 100 Gew.-% wenigstens eines Copolyamids, wie in einem der Ansprüche 1 bis 8 definiert,
    B) 0 bis 75 Gew.-% wenigstens eines Füll- und Verstärkungsstoffs,
    C) 0 bis 50 Gew.-% wenigstens eines Additivs,

    wobei die Komponenten A) bis C) zusammen 100 Gew.-% ergeben.

9. Formkörper, hergestellt aus einer Polyamid-Formmasse nach einem der Ansprüche 7 oder 8.

10. Formkörper nach Anspruch 9, in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

11. Formkörper nach Anspruch 9, in Form oder als Teil eines elektrischen oder elektronischen Bauteils, insbesondere ausgewählt unter Leiterplatten und Teilen davon, Gehäusebestandteilen, Folien, Leitungen, Schaltern, Verteilern, Relais, Widerständen, Kondensatoren, Spulen, Lampen, Dioden, LEDs, Transistoren, Konnektoren, Reglern, Speicherchips und Sensoren.

12. Verwendung eines teilaromatischen Copolyamids, wie in einem der Ansprüche 1 bis 6 definiert oder einer Formmasse, wie in einem der Ansprüche 7 oder 8 definiert, zur Herstellung von Elektro- und Elektronikbauteilen und für Automobil-Anwendungen im Hochtemperaturbereich.

13. Verwendung nach Anspruch 12 für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

**Claims**

1. A semiaromatic copolyamide PA) comprising, in copolymerized form:

    a) 36 to 50 mol% of terephthalic acid,
    b) 0 to 14 mol% of isophthalic acid,
    c) 35 to 42.5 mol% of hexamethylenediamine,
    d) 7.5 to 15 mol% of at least one cyclic diamine, where the cyclic diamine d) comprises isophoronediamine or consists of isophoronediamine,

    where components a) to d) together add up to 100 mol%.

2. The copolyamide according to claim 1, which comprises terephthalic acid and isophthalic acid copolymerized in a molar ratio of less than 100:more than 0 to 80:20.

3. The copolyamide according to any of the preceding claims, which comprises hexamethylenediamine and at least one cyclic diamine copolymerized in a molar ratio of 75:25 to 85:15.

4. The copolyamide according to any of the preceding claims, which comprises hexamethylenediamine and isophoronediamine copolymerized in a molar ratio of 75:25 to 85:15.

**5.** The copolyamide according to any of the preceding claims, which has a glass transition temperature $Tg_2$ of at least 150°C.

**6.** The copolyamide according to any of the preceding claims, which has a heat of fusion $\Delta H_2$ of at least 40 J/g.

**7.** A polyamide molding composition comprising at least one copolyamide as defined in any of claims 1 to 6.

**8.** The polyamide molding composition according to claim 7, comprising:

A) 25 to 100% by weight of at least one copolyamide as defined in any of claims 1 to 8,
B) 0 to 75% by weight of at least one filler and reinforcer,
C) 0 to 50% by weight of at least one additive,

where components A) to C) together add up to 100% by weight.

**9.** A molding produced from a polyamide molding composition according to either of claims 7 and 8.

**10.** The molding according to claim 9, in the form of or as part of a component for the automotive sector, especially selected from cylinder head covers, engine hoods, housings for charge air coolers, charge air cooler valves, intake pipes, intake manifolds, connectors, gears, fan impellers, cooling water tanks, housings or housing parts for heat exchangers, coolant coolers, charge air coolers, thermostats, water pumps, heating elements, securing parts.

**11.** The molding according to claim 9, in the form of or as part of an electrical or electronic component, especially selected from printed circuit boards and parts thereof, housing constituents, films, wires, switches, distributors, relays, resistors, capacitors, windings, lamps, diodes, LEDs, transistors, connectors, regulators, memory chips and sensors.

**12.** The use of a semiaromatic copolyamide as defined in any of claims 1 to 6 or of a molding composition as defined in either of claims 7 and 8 for production of electrical and electronic components and for high-temperature automotive applications.

**13.** The use according to claim 12 in soldering operations under lead-free conditions (lead free soldering), for production of plug connectors, microswitches, microbuttons and semiconductor components, especially reflector housings of light-emitting diodes (LEDs).

**Revendications**

**1.** Copolyamide partiellement aromatique (PA) contenant sous forme copolymérisée :

a) 36 à 50 % en moles d'acide téréphtalique,
b) 0 à 14 % en moles d'acide isophtalique,
c) 35 à 42,5 % en moles d'hexaméthylène-diamine,
d) 7,5 à 15 % en moles d'au moins une diamine cyclique, la diamine cyclique d) comprenant de l'isophorone-diamine ou étant constituée d'isophorone-diamine,

la somme des composants a) à d) étant de 100 % en moles.

**2.** Copolyamide selon la revendication 1, qui contient de l'acide téréphtalique et de l'acide isophtalique sous forme copolymérisée en un rapport en moles de moins de 100: plus de 0 à 80:20.

**3.** Copolyamide selon l'une quelconque des revendications précédentes, qui contient de l'hexaméthylène-diamine et au moins une diamine cyclique sous forme copolymérisée en un rapport en moles de 75:25 à 85:15.

**4.** Copolyamide selon l'une quelconque des revendications précédentes, qui contient de l'hexaméthylène-diamine et de l'isophorone-diamine sous forme copolymérisée en un rapport en moles de 75:25 à 85:15.

**5.** Copolyamide selon l'une quelconque des revendications précédentes, qui présente une température de transition

vitreuse $Tg_2$ d'au moins 150 °C.

6. Copolyamide selon l'une quelconque des revendications précédentes, qui présente une chaleur de fusion $\Delta H_2$ d'au moins 40 J/g.

7. Matériau de moulage polyamide, contenant au moins un copolyamide, tel que défini dans l'une quelconque des revendications 1 à 6.

8. Matériau de moulage polyamide selon la revendication 7, contenant :

   A) 25 à 100 % en poids d'au moins un copolyamide, tel que défini dans l'une quelconque des revendications 1 à 8,
   B) 0 à 75 % en poids d'au moins une charge et matière renforçante,
   C) 0 à 50 % en poids d'au moins un additif,

   la somme des composants A) à C) étant de 100 % en poids.

9. Corps moulé, fabriqué à partir d'un matériau de moulage polyamide selon l'une quelconque des revendications 7 ou 8.

10. Corps moulé selon la revendication 9, sous la forme ou en tant que partie d'un composant pour le domaine automobile, notamment choisi parmi les couvercles de culasses, les caches moteurs, les boîtiers pour échangeur intermédiaire, les valves pour échangeur intermédiaire, les tuyaux d'admission, les tubulures d'admission, les connecteurs, les roues dentées, les hélices, les réservoirs d'eau de refroidissement, les boîtiers ou les parties de boîtiers pour échangeur de chaleur, les refroidisseurs de fluide réfrigérant, les échangeurs intermédiaires, les thermostats, les pompes à eau, les corps chauffants, les parties de fixation.

11. Corps moulé selon la revendication 9, sous la forme ou en tant que partie d'un composant électrique ou électronique, notamment choisi parmi les circuits imprimés et leurs parties, les constituants de boîtiers, les films, les circuits, les interrupteurs, les distributeurs, les relais, les résistances, les condensateurs, les bobines, les lampes, les diodes, les LED, les transistors, les connecteurs, les régulateurs, les puces mémoires et les capteurs.

12. Utilisation d'un copolyamide partiellement aromatique tel que défini dans l'une quelconque des revendications 1 à 6 ou d'un matériau de moulage tel que défini dans l'une quelconque des revendications 7 ou 8, pour la fabrication de composants électriques et électroniques et pour des applications automobiles dans une zone à température élevée.

13. Utilisation selon la revendication 12 pour une utilisation dans des procédés de soudage en conditions sans plomb (lead free soldering), pour la fabrication de connecteurs, de micro-contacteurs, de micro-palpeurs et de composants semi-conducteurs, notamment de boîtiers de réflecteurs de diodes électroluminescentes (LED).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008155271 A
- EP 0667367 A2
- EP 0693515 A1
- EP 0976774 A2
- EP 0129195 A1
- EP 0129196 A1
- WO 0228941 A
- US 4019866 A

- EP 0123377 A2
- DE 4329676 A1
- EP 1095030 A
- EP 584567 A
- DE 102004049342
- FR 1025
- DE 102004050025 A

**In der Beschreibung aufgeführte Nicht-Patentliteratur**

- *CHEMICAL ABSTRACTS,* 56386-64-2